# EUROPEAN PATENT APPLICATION

(11) **EP 4 668 067 A1**
(43) Date of publication of application: **24.12.2025**
(21) Application number: 24756598.9
(22) Date of filing: 25.01.2024
(51) Int. Cl.: G06F 3/0338, A63F 13/24

(54) **OPERATING DEVICE, ANALOG STICK CONTROL METHOD, AND COMPUTER PROGRAM**

(30) Priority: 17.02.2023 JP 2023023149
(71) Applicant: Sony Interactive Entertainment Inc., Tokyo 108-0075 (JP)
(72) Inventor: OGURA Takafumi, Tokyo 108-0075 (JP); OKUBO Tomoyuki, Tokyo 108-0075 (JP); ENOKIHARA Takashi, Tokyo 108-0075 (JP)
(74) Representative: Fish & Richardson P.C.
(86) International application number: PCT/JP2024/002228
(87) International publication number: WO 2024/171747

(57) **Abstract**

Provided is a controller 6 including a storage unit that stores an output value determined in advance and output from an externally-attached analog stick when the analog stick is at a center point. The controller 6 determines, in a case in which a plurality of the output values from the analog stick are values within a range in which the analog stick is assumed to be at the center point, an output value having a highest frequency among the plurality of output values. The controller 6 updates, on the basis of the determined output value, the output value stored in the storage unit.

## Description

### Technical Field

The present invention relates to a data processing technology and particularly relates to an operation device, an analog stick management method, and a computer program.

### Background Art

Among operation devices to which an operation performed by a user is input, there exists an operation device including an analog stick which detects, as analog amounts, a direction in which the stick is tilted and a way in which the stick is pushed. In general, through a defined operation in a manufacturing process of the operation device, output values (voltage values serving as a reference) when the analog stick is at a center point are acquired and stored in the operation device.

### Summary

### Technical Problem

Among the operation devices, there exists an operation device to which an external device can be connected, and a commercially-available analog stick is sometimes connected to such an operation device. Output values when the externally-attached analog stick is at a center point cannot be acquired in the manufacturing process of the operation device.

The present invention has been made in view of the problem described above and has an object to provide a technology for accurately setting an output value serving as a reference relating to an analog stick externally attached to an operation device.

### Solution to Problem

In order to solve the problem described above, an operation device according to a certain aspect of the present invention includes a connection unit to which an analog stick is connected, a storage unit that stores an output value determined in advance and output from the analog stick when the analog stick is at a center point, a determination unit that determines, in a case in which a plurality of the output values from the analog stick are values within a range in which the analog stick is assumed to be at the center point, an output value having a highest frequency among the plurality of output values, and an update unit that updates, on the basis of the output value determined by the determination unit, the output value stored in the storage unit.

Another aspect of the present invention is an operation device. This device includes a connection unit to which an analog stick is connected, a storage unit that stores an output value determined in advance and output from the analog stick when the analog stick is at a center point, and a processor. The processor determines, in a case in which a plurality of the output values from the analog stick are values within a range in which the analog stick is assumed to be at the center point, an output value having a highest frequency among the plurality of output values, and the processor updates, on the basis of the determined output value, the output value stored in the storage unit.

Another aspect of the present invention is an analog stick management method. In this method, an operation device that includes a connection unit to which an analog stick is connected and a storage unit that stores an output value determined in advance and output from the analog stick when the analog stick is at a center point executes a step of determining, in a case in which a plurality of the output values from the analog stick are values within a range in which the analog stick is assumed to be at the center point, an output value having a highest frequency among the plurality of output values and a step of updating, on the basis of the output value determined by the step of determining, the output value stored in the storage unit.

Note that any combination of the foregoing components and conversion of the expressions of the present invention from/to systems, computer programs, recording media storing computer programs, and the like are also effective as aspects of the present invention.

### Advantageous Effect of Invention

According to the present invention, it is possible to accurately set the output value serving as the reference relating to the analog stick externally attached to the operation device.

### Brief Description of Drawings

[FIG. 1] FIG. 1 is a diagram for illustrating a configuration of an information processing system according to an embodiment.
[FIG. 2] FIG. 2 is an explanatory diagram for describing setting of process adjustment values of an analog stick in a typical controller provided with the analog stick.
[FIG. 3] FIG. 3 is a diagram for illustrating a hardware configuration of the controller of FIG. 1 relating to the present embodiment.
[FIG. 4] FIG. 4 is a block diagram for illustrating functional blocks of the controller of FIG. 1 relating to the present embodiment.
[FIG. 5] FIG. 5 is a diagram for illustrating an example of a center point analog-to-digital (AD) value range.
[FIG. 6] FIG. 6 is a graph for illustrating an example of an observation result of the AD values.
[FIG. 7] FIG. 7(a) and FIG. 7(b) are diagrams for illustrating examples of update of a center point AD value.
[FIG. 8] FIG. 8(a) and FIG. 8(b) are diagrams for illustrating examples of a maximum AD value and a minimum AD value.

### Description of Embodiment

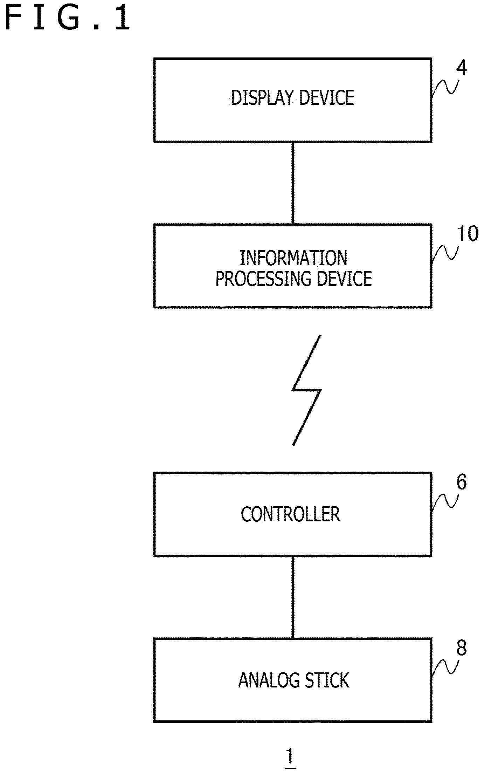

FIG. 1 illustrates a configuration of an information processing system 1 according to an embodiment. The information processing system 1 includes a display device 4, an information processing device 10, a controller 6, and an analog stick 8. The information processing device 10 according to the embodiment is a stationary-type game machine. As a modification example, the information processing device 10 may be a computer, a tablet terminal, or a smartphone which can execute an application such as a game.

The controller 6 is an operation device which receives an operation input by a user in relation to information processing (for example, a video game) executed by the information processing device 10. The controller 6 successively transmits operation information indicating the operation input from the user, to the information processing device 10. The controller 6 is connected wiredly or wirelessly to the information processing device 10. The controller 6 may be a game controller. Moreover, the controller 6 may be an accessibility controller having a high degree of freedom in customization compared to a typical controller such that a physically handicapped person can easily use the controller 6.

The display device 4 may be a television set including a display which outputs an image and a speaker which outputs sound or may be a computer display. The display device 4 may be connected to the information processing device 10 via a wired cable or may be connected thereto wirelessly. When the information processing device 10 receives the operation information provided from the controller 6, the information processing device 10 reflects this operation information in processing in system software and application software, thereby causing an image relating to a processing result to be displayed on the display device 4.

The analog stick 8 is a device including a stick portion operated by the user and is an externally attached device connected wiredly to a jack of the controller 6. As a modification example, the analog stick 8 may be connected to the controller 6 in a wireless form. The analog stick 8 outputs, to the controller 6, analog values (voltage values) detected according to the operation to the stick portion.

In the embodiment, a position of the stick portion in a state in which the stick portion is not operated by the user is referred to as a "center point" of the analog stick 8. The center point of the analog stick 8 can also be considered as a position or a posture of the stick portion which is not tilted. Moreover, the center point of the analog stick 8 can also be referred to as a "center point position," a "center position," and a "neutral position." The stick portion itself provided to the analog stick 8 is also hereinafter referred to as the analog stick 8.

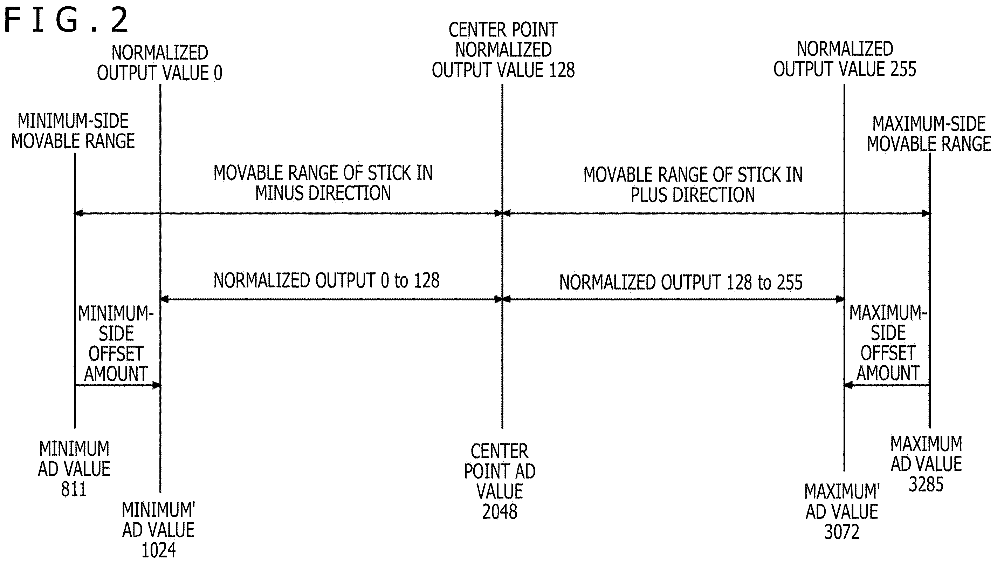

FIG. 2 is an explanatory diagram for describing setting of process adjustment values (calibrated values) of the analog stick in a typical controller provided with the analog stick. The setting of the process adjustment values of the analog stick is executed through the following procedure.
(1) The process adjustment values relating to the center point are obtained. The analog stick is operated in four directions (up/down/left/right directions or upper right/upper left/lower right/lower left directions), the voltage values at each time of operation are read by the microcomputer, and AD conversion is applied to the read voltage values. The value obtained after the AD conversion (hereinafter also referred to as an "AD value") is expressed in 12 bits (0 to 4095). Average values of the AD values detected in the operation in the four directions are stored in a storage area of the controller as the AD values obtained when the analog stick is at the center point (hereinafter also referred to as "center point AD values"). The center point AD value in FIG. 2 is "2048."
-(2) Process adjustment values (on minimum output sides and maximum output sides) relating to maximum tilted states are obtained.
   The analog stick is rotated by one+α times or more, and the voltage values at this time are always detected. Minimum voltage values (minimum AD values) and maximum voltage values (maximum AD values) among the detected voltage values are stored as the process adjustment values in the storage area of the controller. The minimum AD value is the AD value detected in a state in which the analog stick is maximally tilted on the minimum output side, and the minimum AD value of FIG. 2 is "811." The maximum AD value is the AD value detected in a state in which the analog stick is maximally tilted on the maximum output side, and the maximum AD value of FIG. 2 is "3285."
(3) Internal parameters are generated on the basis of the center point AD values, the minimum AD values, and the maximum AD values, and a width of each of the output values (dynamic ranges) is obtained through calculation.
   An offset amount is provided to each of a minimum-side movable range and a maximum-side movable range. The offset amounts may be one of or both a predetermined rate (for example, 4%) of a distance from the center point AD value to the minimum AD value and a predetermined rate (for example, 4%) of a distance from the center point AD value to the maximum AD value. The minimum output side (a minimum' to the center point) excluding the offset is normalized in a range of 0 to 128. Moreover, the maximum output side (the center point to a maximum') excluding the offset is normalized in a range of 128 to 255.
(4) An AD value corresponding to a normalized output value 0 is referred to as a minimum' AD value, and an AD value corresponding to a normalized output value 255 is referred to as a maximum' AD value. The center point AD values, the minimum AD values, the minimum' AD values, the maximum AD values, and the maximum' AD values are values serving as references for generating the operation information and are stored in the storage area of the controller 6.

The reference value (which can also be referred to as an adjusted value, for example, each AD value described above) is typically determined in a controlled environment such as a factory through a defined operation and is then stored in the controller 6. Here, the reference values vary depending on the individual controllers 6 (analog sticks). Hence, it is difficult to store, in advance in the controller 6, the reference values relating to the analog stick 8 which is manufactured independently of the controller 6 and then externally attached to the controller 6. In the embodiment, there is proposed a technology for dynamically setting the adjusted values relating to the analog stick 8 externally attached to the controller 6.

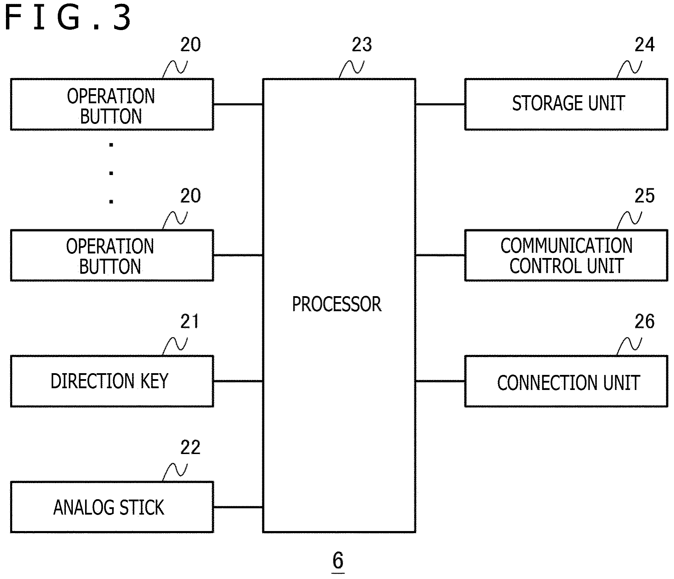

FIG. 3 is a diagram for illustrating a hardware configuration relating to the present embodiment of the controller 6 of FIG. 1. The controller 6 includes operation buttons 20, a direction key 21, an analog stick 22, a processor 23, a storage unit 24, a communication control unit 25, and a connection unit 26.

The operation button 20 is a button for inputting an operation such as determination and cancellation. The direction key 21 is a button capable of receiving input in eight directions being up, down, left, right, and oblique directions. The analog stick 22 is an analog stick disposed on the controller 6 at the time of manufacturing the controller 6 and is different from the externally-attached analog stick 8. The processor 23 executes various types of data processing. The processor 23 may include a central processing unit (CPU), a memory, and a system on a chip (SoC).

The storage unit 24 stores data referred to or updated by the processor 23. The storage unit 24 includes, for example, a flash memory. The communication control unit 25 controls communication with an external device. In the embodiment, the communication control unit 94 wirelessly communicates with the information processing device 10, but, as a modification example, the communication control unit 94 may wiredly communicate with the information processing device 10. The connection unit 26 is an interface to which the analog stick 8 is connected. The connection unit 26 in the embodiment is a jack (for example, an auxiliary (AUX) port) of ϕ3.5.

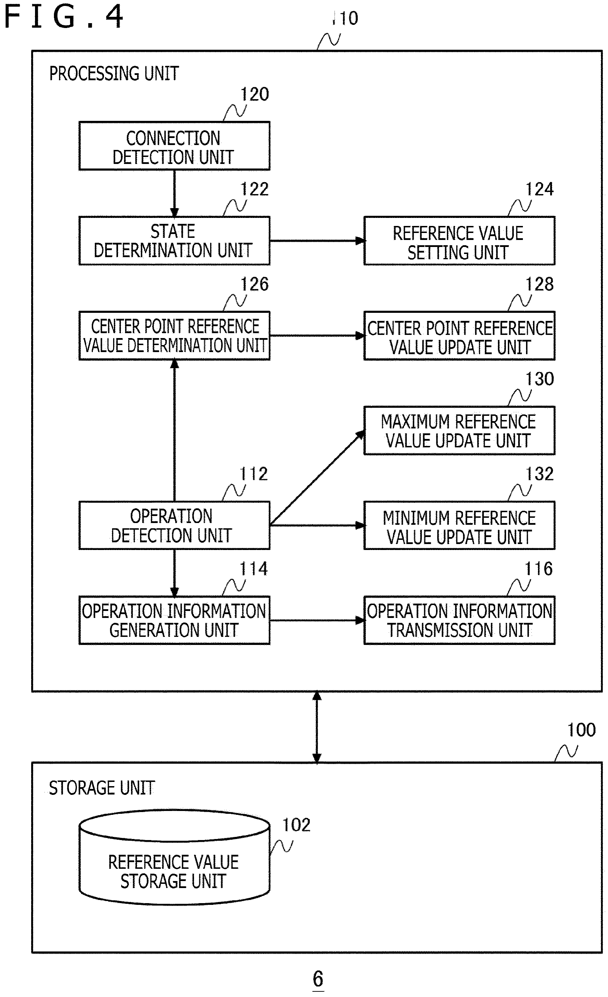

FIG. 4 is a block diagram for illustrating functional blocks relating to the present embodiment of the controller 6 of FIG. 1. Each block illustrated in the block diagram herein can be implemented by elements and electronic circuits such as a processor, a CPU, and a memory of a computer and mechanical devices in terms of hardware and are implemented by, for example, computer programs loaded on a memory in terms of software, and functional blocks implemented through cooperation thereof are herein illustrated. It is hence understood by a person skilled in the art that these functional blocks can be implemented in various forms through the combination of the hardware and the software.

The controller 6 includes a storage unit 100 and a processing unit 110. The processing unit 110 executes various types of information processing. The processing unit 110 is implemented by the processor 23. The storage unit 100 corresponds to the storage unit 24 of FIG. 3 and stores the data referred to or updated by the processing unit 110. The storage unit 100 includes the reference value storage unit 102.

The reference value storage unit 102 stores the center point AD values described above being the output values from the externally-attached analog stick 8 when the analog stick 8 is at the center point. Moreover, the tilt of the analog stick 8 is managed in terms of two axes being an X axis (horizontal axis) and a Y axis (vertical axis). The reference value storage unit 102 stores, for each of the X axis and the Y axis, the maximum AD value and the maximum' AD value being the output values when the analog stick 8 is maximally tilted toward the maximum output side. Further, the reference value storage unit 102 stores, for each of the X axis and the Y axis, the minimum AD value and the minimum' AD value being the output values when the analog stick 8 is maximally tilted toward the minimum output side. In a case in which the center point AD values, the minimum AD values, the minimum' AD values, the maximum AD values, and the maximum' AD values are generally referred to, they are referred to as "reference AD values."

The reference value storage unit 102 may be implemented by a volatile memory. In this case, each time a power supply of the controller 6 is switched from OFF to ON, new reference AD values may be created and may then be stored in the reference value storage unit 102. Moreover, each time the analog stick 8 is switched from a state in which the analog stick 8 is not connected to the controller 6 to a state in which the analog stick 8 is connected to the controller 6, the new reference AD values may be created and may then be stored in the reference value storage unit 102.

The processing unit 110 includes an operation detection unit 112, an operation information generation unit 114, an operation information transmission unit 116, a connection detection unit 120, a state determination unit 122, a reference value setting unit 124, a center point reference value determination unit 126, a center point reference value update unit 128, a maximum reference value update unit 130, and a minimum reference value update unit 132. A computer program (for example, firmware) implementing functions of at least some of the plurality of functional blocks may be stored in the storage unit 24 of the controller 6. The processor 23 of the controller 6 may read this computer program into the main memory to execute the computer program, thereby exerting the functions of the at least some of the functional blocks described above.

The operation detection unit 112 detects the operation performed by the user and input to the controller 6 and the analog stick 8. The operation performed by the user includes an operation of depressing the various types of buttons of the controller 6, an operation of tilting the analog stick 22 of the controller 6, and an operation of tilting the externally-attached analog stick 8.

The operation detection unit 112 acquires analog values relating to the operation of the analog stick 8 by the user, the analog values being indicated by output signals from the analog stick 8. The operation detection unit 112 applies AD conversion to the analog values acquired from the analog stick 8 and passes the digital values (AD values) having undergone the conversion to the operation information generation unit 114.

The operation information generation unit 114 generates, on the basis of the operation by the user input to the controller 6 and detected by the operation detection unit 112, operation information relating to this operation performed by the user. In the embodiment, the operation information generation unit 114 compares the AD values output from the operation detection unit 112 and the reference AD values (the center point AD values, the minimum' AD values, and the maximum' AD values) stored in the reference value storage unit 102 with each other, thereby deriving the normalized output values (values of 0 to 255) corresponding to the AD values output from the operation detection unit 112.

The operation information transmission unit 116 transmits the operation information generated by the operation information generation unit 114 to the information processing device 10. For example, the operation information transmits, to the information processing device 10, the operation information including the normalized output values derived by the operation information generation unit 114. The information processing device 10 executes an application such as a game on the basis of the operation information transmitted from the controller 6.

The connection detection unit 120 detects the connection of a device (the analog stick 8 in the embodiment) to the connection unit 26. The state determination unit 122 determines, on the basis of the output values from the analog stick 8, whether or not the analog stick 8 is in a normal state. The reference value setting unit 124 derives initial values of the reference AD values on the basis of the result of determination as to whether or not the analog stick 8 is in the normal state and the output values from the analog stick 8 and stores the initial values in the reference value storage unit 102.

The center point reference value determination unit 126 determines, on the basis of the output values from the analog stick 8, values (second center point AD values to be described later) for updating the reference AD values stored in the reference value storage unit 102. The center point reference value update unit 128 updates, on the basis of the values for the update determined by the center point reference value determination unit 126, the center point AD values serving as the reference AD values stored in the reference value storage unit 102.

The maximum reference value update unit 130 updates, on the basis of the output values from the analog stick 8, the maximum AD values and the maximum' AD values serving as the reference AD values stored in the reference value storage unit 102. The minimum reference value update unit 132 updates, on the basis of the output values from the analog stick 8, the minimum AD values and the minimum' AD values serving as the reference AD values stored in the reference value storage unit 102.

A description is now given of an operation of the controller 6 having the configuration described above.
First, a description is given of an operation performed at the time of the connection of the analog stick 8 to the connection unit 26 of the controller 6, which is an operation performed at the time of first setting of the reference AD values.

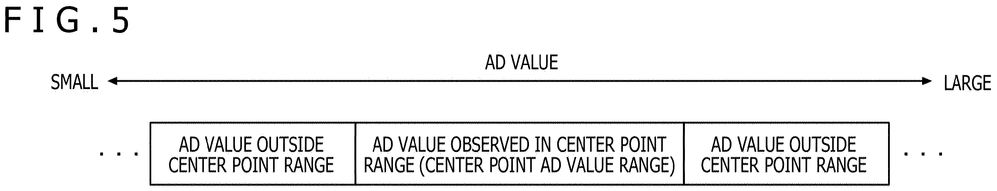

The connection detection unit 120 of the controller 6 detects, on the basis of the signals output from the analog stick 8, the connection of the analog stick 8 to the connection unit 26. The state determination unit 122 of the controller 6 holds a range of the AD values (hereinafter also referred to as a "center point AD value range") in which the analog stick 8 is assumed to be at the center point or in a vicinity range thereof (hereinafter also referred to as a "center point range"). FIG. 5 illustrates an example of the center point AD value range. The center point AD value range is defined in advance on the basis of a description in a specification of the analog stick 8.

The state determination unit 122 applies AD conversion to the analog values output from the analog stick 8, thereby acquiring the AD values (hereinafter also referred to as "output AD values"). The state determination unit 122 determines whether or not each output AD value is included in each center point AD value range. The state determination unit 122 repeats the acquisition of the output AD values and the determination every one millisecond for 1000 times.

The state determination unit 122 determines that the analog stick 8 is in the normal state in a case in which a normal criterion defined in advance is satisfied. The normal criterion is satisfied in a case in which each output AD value from the analog stick 8 is included in each center point AD value range continuously for 100 milliseconds, in other words, in a case in which the determination result is consecutively affirmative for 100 times. The state in which the analog stick 8 is normal includes a state in which the analog stick 8 is not broken and a state in which the analog stick 8 is not connected in a tilted state. The state determination unit 122 determines that the analog stick 8 is in an abnormal state when the normal determination criterion is not satisfied during 1000 times of determination.

In a case in which the analog stick 8 is determined to be in the normal state by the state determination unit 122, the reference value setting unit 124 stores, in the reference value storage unit 102, the center point AD values based on the output AD values from the analog stick 8. Meanwhile, in a case in which the analog stick 8 is determined to be in the abnormal state by the state determination unit 122, the reference value setting unit 124 stores, in the reference value storage unit 102, a median "2048" of the 12-bit AD value as each center point AD value. Moreover, the reference value setting unit 124 stores, in the reference value storage unit 102, the minimum AD values, the minimum' AD values, the maximum AD values, and the maximum' AD values defined in advance on the basis of the description in the specification of the analog stick 8.

A detailed description is now given of the setting of the center point AD values by the reference value setting unit 124. The reference value setting unit 124 derives, as each center point AD value, an average value of the output AD values (hereinafter also referred to as "sampling AD values") for the last ten times falling within the center point AD value range. The reference value setting unit 124 applies, to each of the ten sampling AD values, the following conversion for canceling a hysteresis and then derives an average value.

The hysteresis is a predetermined rate at each of both ends of the center point AD value range and is hereinafter denoted as "Center_{His}%." Moreover, the minimum value of the center point AD value range is denoted as "Centerₘᵢₙ," and the maximum value of the center point AD value range is denoted as "Centerₘₐₓ."
In a case in which the sampling AD value is in a range of Centerₘᵢₙ to Centerₘᵢₙ+Center_{His}%, the sampling AD value is converted to Centerₘᵢₙ+Center_{His}%.
In a case in which the sampling AD value is in a range of Centerₘₐₓ-Center_{His}% to Centerₘₐₓ, the sampling AD value is converted to Centerₘₐₓ-Center_{His}%.
As the Center_{His}%, an appropriate value may be determined through knowledge of a developing person or an experiment through use of the information processing system 1.

The reference AD values are stored in the reference value storage unit 102 of the controller 6 through the operation described above. The operation information generation unit 114 of the controller 6 derives the normalized output values (0 to 255) corresponding to the operation performed by the user and input to the analog stick 8, on the basis of the reference AD values stored in the reference value storage unit 102, thereby generating the operation information. The operation information transmission unit 116 of the controller 6 transmits the operation information to the information processing device 10.

However, in a case in which the analog stick 8 is tilted within the center point range or in a case in which the measurement of the tilt amount fails for some reason, for example, at the time when the analog stick 8 is connected to the controller 6, the center point position (center point AD values) of the analog stick 8 is erroneously recognized. Hence, the controller 6 repeatedly executes an operation of calibrating the center point AD values.

A description is now given of the operation of calibrating the center point AD values. The operation detection unit 112 of the controller 6 applies the AD conversion to a plurality of the analog values sequentially output from the analog stick 8 and sequentially passes a plurality of the AD values obtained as a result of the conversion to the center point reference value determination unit 126. The center point reference value determination unit 126 determines, in a case in which the plurality of AD values corresponding to the plurality of output values from the analog stick 8 are values within each center point AD value range, an AD value having a highest frequency among the plurality of AD values. The center point reference value determination unit 126 acquires and passes the AD value having the highest frequency among the plurality of AD values to the center point reference value update unit 128. In the embodiment, the center point reference value determination unit 126 determines, as the center point AD value, the AD value having the highest frequency among the plurality of AD values. The center point AD value determined by the center point reference value determination unit 126 is a value for updating the center point AD value serving as the reference value stored in the reference value storage unit 102.

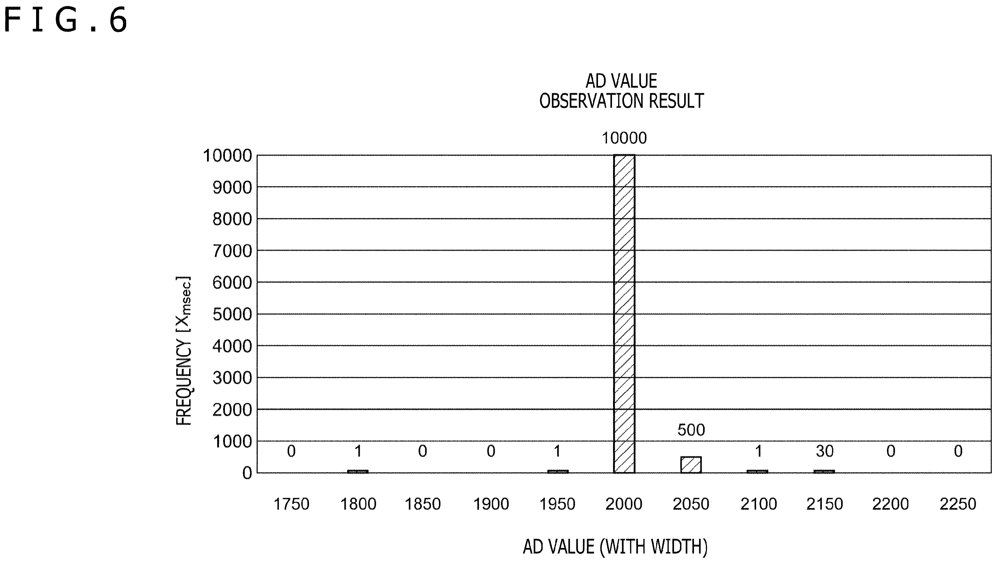

Specifically, the center point reference value determination unit 126 subdivides the center point AD value range illustrated in FIG. 5, obtains a frequency for each subdivided range (hereinafter also referred to as a "rank") of the observed AD values, and determines a plurality of ranks. FIG. 6 is a graph for illustrating an example of an observation result of the AD values. A horizontal axis of FIG. 6 indicates the rank of the AD value. For example, an AD value rank 2000 indicates a range of 2000 to 2049 of the AD value. Moreover, an AD value rank 2050 indicates a range of 2050 to 2099 of the AD value. A vertical axis indicates the frequency (in other words, the number of times).

Here, the center point range is set to ±XmV, and the number of AD values in XmV on one side is set to X _{ad}counts. The AD value in the embodiment has the 12-bit resolution and hence is a value of 0 to 4095. Here, the width of the AD rank value when the center point range to be normalized is to be assigned as ±N counts is twice the width of the AD value assigned as one normalized output value. For example, in a case in which 25 _{ad}counts correspond to one normalized output value, the width of each rank value at the time of acquiring statistics is set to 50 _{ad}counts.

A description is now given of the width (AD count value) of each rank range. Even when the analog stick 8 is stationary, influence of quantization noise corresponding to approximately several counts exists. In order to reduce the influence of the quantization noise on the AD values in the stationary state, the width of each rank range is required to be sufficiently wider than a width which varies due to the quantization noise. Moreover, when the width of each rank range is reduced, accuracy increases while a processing amount increases. Hence, it is desired that the width be wider as long as required accuracy is secured. The width of each rank range in the embodiment is 50 _{ad}counts.

The center point reference value determination unit 126 repeats processing of receiving the output AD values from the analog stick 8 and incrementing the frequency of the rank to which each output AD value corresponds every one millisecond until the frequency of the rank having the highest frequency (the rank in the first place in frequency) reaches 10000 times. In the example of FIG. 6, a first place in frequency is an AD value rank 2000 (the frequency is 10000), a second place in frequency is an AD value rank 2050 (the frequency is 500), and a third place in frequency is an AD value rank 2150 (the frequency is 30).

The AD value rank in the first place in frequency and the AD value rank in the second place in frequency are basically next to each other, and hence, there is a possibility that a difference between the frequency in the first place and the frequency in the second place decreases when chattering occurs in the analog stick 8. Accordingly, in the embodiment, the center point reference value determination unit 126 ignores the AD value rank in the second place in frequency. The center point reference value determination unit 126 uses the frequency of the AD value rank in the first place in frequency and the frequency of the AD value rank in the third place in frequency to determine whether or not the ratio of the frequency of the AD value rank in the first place in frequency exceeds a predetermined threshold value. In a case in which the ratio exceeds the threshold value, the center point reference value determination unit 126 determines that the analog stick 8 is in the stationary state, in other words, in the state in which the analog stick 8 is not tilted. As the threshold value described above, an appropriate value may be determined through knowledge of the developing person or an experiment through use of the information processing system 1. The threshold value in the embodiment is 0.97.

In the example of FIG. 6, (frequency of AD value rank in first place in frequency)/(frequency of AD value rank in first place in frequency + frequency of AD value rank in third place in frequency) = 10000/10030 = 0.997. The ratio of the frequency of the AD value rank in the first place in frequency exceeds the threshold value 0.97, and hence, the center point reference value determination unit 126 determines that the analog stick 8 is in the stationary state. In a case in which the analog stick 8 is determined to be in the stationary state, the center point reference value determination unit 126 determines, as the center point AD value, a median of the AD value rank in the first place in frequency. In the example of FIG. 6, the median 2025 of the AD value rank 2000 in the first place in frequency is determined as the center point AD value.

The center point reference value determination unit 126 determines that the analog stick 8 is not in the stationary state in a case in which the ratio of the frequency of the AD value rank in the first place in frequency is equal to or lower than the predetermined threshold value (for example, 0.97). In the case in which the center point reference value determination unit 126 determines that the analog stick 8 is not in the stationary state, the center point reference value determination unit 126 discards a distribution of the AD values created up to the current time and creates a new distribution of the AD value. That is, the center point reference value determination unit 126 newly starts the processing of incrementing the frequency of the rank to which the newly received AD value corresponds.

The center point reference value determination unit 126 obtains, in a case in which at least one AD value among the plurality of AD values corresponding to the plurality of output values from the analog stick 8 is a value outside the center point AD value range, in place of the plurality of AD values created up to the current time, the frequency of each rank of a plurality of new AD values corresponding to a plurality of output values newly output from the analog stick 8. That is, in a case in which the center point reference value determination unit 126 acquires the AD value outside the center point AD value range before the frequency of the rank in the first place in frequency reaches 10000, in other words, during the ranking, the center point reference value determination unit 126 determines that the analog stick 8 is not in the stationary state. In the case in which the center point reference value determination unit 126 determines that the analog stick 8 is not in the stationary state, the center point reference value determination unit 126 discards the distribution of the AD values created up to the current time and creates a new distribution of the AD value.

The center point reference value update unit 128 of the controller 6 updates, on the basis of the center point AD values (hereinafter also referred to as "second center point AD values") determined by the center point reference value determination unit 126, the center point AD values (hereinafter also referred to as "first center point AD values") stored in advance in the reference value storage unit 102. The center point reference value update unit 128 does not change the first center point AD value to the second center point AD value at once, but changes the first center point AD value such that the first center point AD value approaches the second center point AD value by an amount smaller than a difference between the first center point AD value and the second center point AD value.

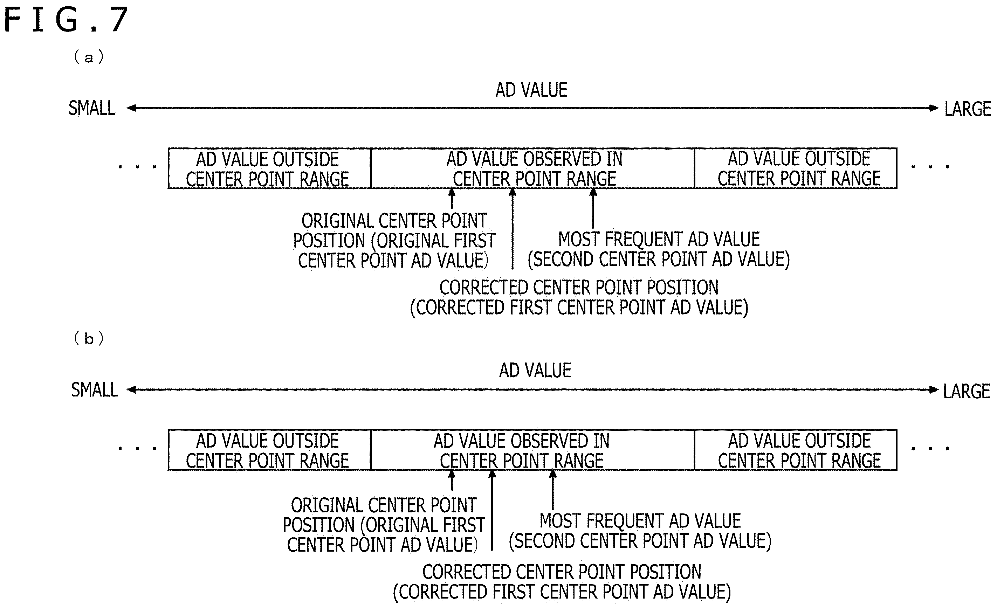

FIG. 7(a) and FIG. 7(b) are diagrams for illustrating examples of the update of the center point AD value. As illustrated in FIG. 7(a), in a case in which the difference between the first center point AD value and the second center point AD value is larger than a distance threshold value defined in advance, the center point reference value update unit 128 changes the first center point AD value relatively greatly to cause the first center point AD value to approach the second center point AD value. That is, as illustrated in FIG. 7(a), the center point reference value update unit 128 updates the original first center point AD value to the corrected first center point AD value. As a result, in a case in which an error in the first center point AD value is large, swift resolution of an error is facilitated.

Meanwhile, as illustrated in FIG. 7(b), in a case in which the difference between the first center point AD value and the second center point AD value is equal to or smaller than the distance threshold value, the center point reference value update unit 128 changes the first center point AD value relatively slightly to cause the first center point AD value to approach the second center point AD value. That is, as illustrated in FIG. 7(b), the center point reference value update unit 128 updates the original first center point AD value to the corrected first center point AD value. As a result, in a case in which the error in the first center point AD value is small, the resolution of the error is facilitated without causing the user to feel a sense of strangeness. Note that, in any one of the case of FIG. 7(a) and the case of FIG. 7(b), the new first center point AD value updated for this time and the newly determined second center point AD value are compared with each other at the next update time.

As the distance threshold value described above, an appropriate value may be determined through knowledge of the developing person or an experiment through use of the information processing system 1 and may be, for example, a difference 100 in AD value. For example, in a case in which the difference between the first center point AD value and the second center point AD value exceeds 100 for the first update time, the first center point AD value may be displaced by 100, to approach the second center point AD value. At the following second update time, when the difference between the first center point AD value updated at the first update time and a new second center point AD value is equal to or less than 100, the first center point AD value may be displaced by 25, to approach the second center point AD value. Moreover, in a case in which the difference between the first center point AD value and the second center point AD value is equal to or less than 25, the update of the first center point AD value may be suppressed.

As a modification example, the center point reference value update unit 128 may change the first center point AD value more greatly as the difference between the first center point AD value and the second center point AD value is larger. Moreover, the center point reference value update unit 128 may change the first center point AD value more slightly as the difference between the first center point AD value and the second center point AD value is smaller. Also in this modification example, in a case in which the error in the first center point AD value is large, the swift resolution of the error is facilitated, and in a case in which the error in the first center point AD value is small, the resolution of the error is facilitated without causing the user to feel the sense of strangeness.

A description is now given of an operation of calibrating the maximum AD values and the minimum AD values.

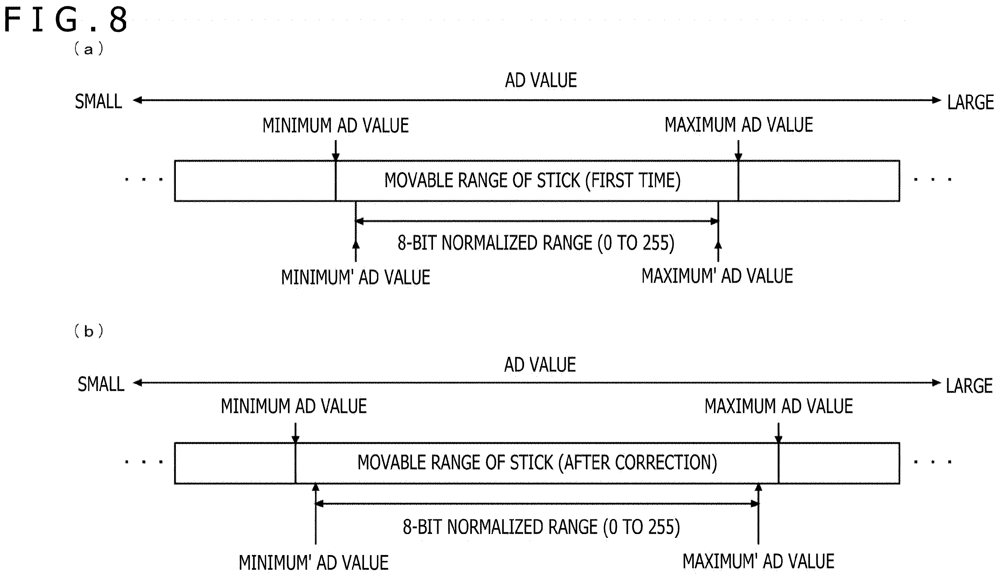

FIG. 8(a) and FIG. 8(b) are diagrams for illustrating examples of the maximum AD value and the minimum AD value. FIG. 8(a) illustrates an example of the minimum AD value, the minimum' AD value, the maximum AD value, and the maximum' AD value set at the time when the analog stick 8 is connected to the controller 6. As described before, the reference value setting unit 124 of the controller 6 stores, in the reference value storage unit 102, the minimum AD value, the minimum' AD value, the maximum AD value, and the maximum' AD value defined in advance on the basis of the description in the specification of the analog stick 8.

The maximum reference value update unit 130 of the controller 6 dynamically changes, according to the operation performed by the user and input to the analog stick 8, the maximum AD values and the maximum' AD values. Moreover, the minimum reference value update unit 132 dynamically changes, according to the operation performed by the user and input to the analog stick 8, the minimum AD values and the minimum' AD values. The maximum tilt amount (maximum AD value) and the minimum tilt amount (minimum AD value) with respect to the center point (center point AD value) often have widths not equal to each other. Accordingly, the processing of the maximum reference value update unit 130 and the processing of the minimum reference value update unit 132 are executed independently of each other. In other words, a set of the maximum AD values and the maximum AD' values and a set of the minimum AD values and the minimum AD' values are adjusted independently of each other.

FIG. 8(b) is a diagram for illustrating an example of the minimum AD value, the minimum' AD value, the maximum AD value, and the maximum' AD value after the calibration. The operation detection unit 112 of the controller 6 passes the AD values based on the operation performed by the user and input to the analog stick 8 to the maximum reference value update unit 130 and the minimum reference value update unit 132.

The maximum reference value update unit 130 updates, in a case in which the received AD value is larger than the maximum AD value stored in the reference value storage unit 102, the maximum AD value in the reference value storage unit 102 to the received AD value. Moreover, the maximum reference value update unit 130 subtracts the predetermined offset amount from the updated maximum AD value, thereby deriving the maximum' AD value. The maximum reference value update unit 130 updates the maximum' AD value in the reference value storage unit 102 to the new maximum' AD value.

The minimum reference value update unit 132 updates, in a case in which the received AD value is smaller than the minimum AD value stored in the reference value storage unit 102, the minimum AD value in the reference value storage unit 102 to the received AD value. Moreover, the minimum reference value update unit 132 adds the predetermined offset amount to the updated minimum AD value, thereby deriving the minimum' AD value. The maximum reference value update unit 130 updates the minimum' AD value in the reference value storage unit 102 to the new minimum' AD value.

Note that the tilt of the analog stick 8 is managed in terms of the two axes being the X axis (horizontal axis) and the Y axis (vertical axis). The maximum reference value update unit 130 updates the maximum AD value and the maximum' AD value of each of the X axis and the Y axis. The minimum reference value update unit 132 updates the minimum AD value and the minimum' AD value of each of the X axis and the Y axis.

The controller 6 according to the embodiment can dynamically and accurately determine the AD values (the center point AD values, the minimum AD values, the minimum' AD values, the maximum AD values, and the maximum' AD values) serving as the references for deriving the normalized output values correctly reflecting the user operation input to the analog stick 8. Moreover, the controller 6 can continuously calibrate the AD values serving as the references. Further, the controller 6 causes the center point AD value to gradually approach the correct value in the case in which the center point AD value is to be updated, making it possible to prevent the operation result of the analog stick 8 becoming a result not intended by the user.

A description has been given of the present invention on the basis of the embodiment. This embodiment is illustrative, and it is to be understood by those skilled in the art that modification examples may be made in the combinations of the components and the processing processes thereof and that these modification examples are also within the scope of the present invention.

A description is now given of a modification example. In the embodiment described above, the center point reference value determination unit 126 determines whether or not the analog stick 8 is in the stationary state on the basis of the frequency of the rank in the first place in frequency and the frequency of the rank in the third place in frequency in the distribution of the AD values. As the modification example, the center point reference value determination unit 126 may obtain a rank in the second place in frequency within ranks excluding both sides of the rank in the first place in frequency in the distribution of the AD values. In this case, the center point reference value determination unit 126 may determine whether or not the analog stick 8 is in the stationary state on the basis of the frequency of the rank in the first place in frequency and the frequency of the rank in the second place in frequency. In this modification example, the center point reference value determination unit 126 may determine that the analog stick 8 is in the stationary state in a case in which (frequency in first place)/(frequency in first place + frequency in second place) exceeds the predetermined threshold value (for example, 0.97).

Any combination of the embodiment and the modification example described above is also useful as an embodiment of the present invention. The new embodiment generated as a result of the combination has both the effects of the combined embodiment and the effects of the combined modification example. Moreover, it is also understood by a person skilled in the art that the functions to be provided by each of components described in claims are implemented by the sole component or cooperation of the components described in the embodiment and the modification example.

A technical idea described in the embodiment and the modification example can be expressed as an aspect described in each of the following items.
[Item 1] An operation device including:
   a connection unit to which an analog stick is connected;
   a storage unit that stores an output value determined in advance and output from the analog stick when the analog stick is at a center point;
   a determination unit that determines, in a case in which a plurality of the output values from the analog stick are values within a range in which the analog stick is assumed to be at the center point, an output value having a highest frequency among the plurality of output values as an output value at the time when the analog stick is at the center point; and
   an update unit that updates, on the basis of the output value determined by the determination unit as the output value when the analog stick is at the center point, the output value stored in the storage unit.
   With this operation device, it is possible to accurately determine the output value (the output value serving as a reference) when the analog stick is not operated and is at the center point.
[Item 2] The operation device described in the item 1,
   in which the determination unit obtains, in a case in which at least one output value among the plurality of output values from the analog stick is a value outside the range, frequencies of a plurality of output values newly output from the analog stick in place of the plurality of output values.
   With this operation device, it is possible to accurately determine the output value (the output value serving as the reference) when the analog stick is not operated and is at the center point.
[Item 3] The operation device described in the item 1 or 2,
   in which, when the output value stored in the storage unit is referred to as a first output value and the output value determined by the determination unit as the output value when the analog stick is at the center point is referred to as a second output value,
   the update unit changes the first output value such that the first output value approaches the second output value by an amount smaller than a difference between the first output value and the second output value.
   With this operation device, it is possible to suppress the change amount of the output value (the output value serving as the reference) when the analog stick is at the center point, thereby facilitating avoidance of an unintended operation result for the user.
[Item 4] The operation device described in the item 3,
   in which the update unit more largely changes the first output value as the difference between the first output value and the second output value is larger and more slightly changes the first output value as the difference between the first output value and the second output value is smaller.
   With this operation device, it is possible to swiftly resolve an error in the first output value in the case in which the error in the first output value is large, and the resolution of the error is facilitated without causing the user to feel the sense of strangeness in the case in which the error in the first output value is small.
[Item 5] The operation device described in any one of the items 1 to 4,
   in which the determination unit determines, as the output value when the analog stick is at the center point, the output value having the highest frequency in a case in which a ratio of the highest frequency based on the highest frequency and a third highest frequency in a distribution of the plurality of output values exceeds a predetermined threshold value.
   The highest frequency and a second highest frequency are basically next to each other in the distribution of the plurality of output values, and hence, there is a possibility that the highest frequency and the second highest frequency are frequencies similar to each other in the case of an occurrence of chattering. With this operation device, it is possible to accurately determine the output value (the output value serving as the reference) when the analog stick is at the center point even in a case in which the chattering occurs.
[Item 6] An operation device including:
   a connection unit to which an analog stick is connected;
   a storage unit that stores an output value determined in advance and output from the analog stick when the analog stick is at a center point; and
   a processor,
   in which the processor determines, in a case in which a plurality of the output values from the analog stick are values within a range in which the analog stick is assumed to be at the center point, an output value having a highest frequency among the plurality of output values as the output value when the analog stick is at the center point, and
   the processor updates, on the basis of the determined output value when the analog stick is at the center point, the output value stored in the storage unit.
   With this operation device, it is possible to accurately acquire the output value (the output value serving as the reference) when the analog stick is not operated and is at the center point.
[Item 7] An analog stick management method including:
   by an operation device including
   a connection unit to which an analog stick is connected, and
   a storage unit that stores an output value determined in advance and output from the analog stick when the analog stick is at a center point,
   a step of determining, in a case in which a plurality of the output values from the analog stick are values within a range in which the analog stick is assumed to be at the center point, an output value having a highest frequency among the plurality of output values as the output value when the analog stick is at the center point; and
   a step of updating, on the basis of the output value determined by the step of determining as the output value when the analog stick is at the center point, the output value stored in the storage unit.
   With this analog stick management method, it is possible to accurately acquire the output value (the output value serving as the reference) when the analog stick is not operated and is at the center point.
[Item 8] A computer program for causing an operation device including
   a connection unit to which an analog stick is connected, and
   a storage unit that stores an output value determined in advance and output from the analog stick when the analog stick is at a center point,
   to implement:
      a function of determining, in a case in which a plurality of the output values from the analog stick are values within a range in which the analog stick is assumed to be at the center point, an output value having a highest frequency among the plurality of output values as the output value when the analog stick is at the center point; and
      a function of updating, on the basis of the output value determined by the function of determining as the output value when the analog stick is at the center point, the output value stored in the storage unit.
   With this computer program, it is possible to cause the operation device to achieve processing of accurately acquiring the output value (the output value serving as the reference) when the analog stick is not operated and is at the center point.

### [Industrial Applicability]

The present invention is applicable to an operation device and is also applicable to a system including an operation device.

### [Reference Signs List]

1: Information processing system
6: Controller
8: Analog stick
23: Processor
26: Connection unit
102: Reference value storage unit
112: Operation detection unit
122: State determination unit
124: Reference value setting unit
126: Center point reference value determination unit
128: Center point reference value update unit
130: Maximum reference value update unit
132: Minimum reference value update unit

## Claims

1. An operation device comprising:
a connection unit to which an analog stick is connected;
a storage unit that stores an output value determined in advance and output from the analog stick when the analog stick is at a center point;
a determination unit that determines, in a case in which a plurality of the output values from the analog stick are values within a range in which the analog stick is assumed to be at the center point, an output value having a highest frequency among the plurality of output values; and
an update unit that updates, on a basis of the output value determined by the determination unit, the output value stored in the storage unit.

2. The operation device according to claim 1,
wherein the determination unit obtains, in a case in which at least one output value among the plurality of output values from the analog stick is a value outside the range, frequencies of a plurality of output values newly output from the analog stick in place of the plurality of output values.

3. The operation device according to claim 1,
wherein, when the output value stored in the storage unit is referred to as a first output value and the output value determined by the determination unit is referred to as a second output value,
the update unit changes the first output value such that the first output value approaches the second output value by an amount smaller than a difference between the first output value and the second output value.

4. The operation device according to claim 3,
wherein the update unit changes, in a case in which the difference between the first output value and the second output value is larger than a predetermined threshold value, the first output value relatively largely and changes, in a case in which the difference between the first output value and the second output value is equal to or smaller than the predetermined threshold value, the first output value relatively slightly.

5. The operation device according to claim 1,
wherein the determination unit acquires the output value having the highest frequency in a case in which a ratio of the highest frequency based on the highest frequency and a third highest frequency in a distribution of the plurality of output values exceeds a predetermined threshold value.

6. An operation device comprising:
a connection unit to which an analog stick is connected;
a storage unit that stores an output value determined in advance and output from the analog stick when the analog stick is at a center point; and
a processor;
wherein the processor determines, in a case in which a plurality of the output values from the analog stick are values within a range in which the analog stick is assumed to be at the center point, an output value having a highest frequency among the plurality of output values, and
the processor updates, on a basis of the determined output value, the output value stored in the storage unit.

7. An analog stick management method comprising:
by an operation device including
a connection unit to which an analog stick is connected, and
a storage unit that stores an output value determined in advance and output from the analog stick when the analog stick is at a center point,
a step of determining, in a case in which a plurality of the output values from the analog stick are values within a range in which the analog stick is assumed to be at the center point, an output value having a highest frequency among the plurality of output values; and
a step of updating, on a basis of the output value determined by the step of determining, the output value stored in the storage unit.

8. A computer program for causing an operation device including
a connection unit to which an analog stick is connected, and
a storage unit that stores an output value determined in advance and output from the analog stick when the analog stick is at a center point,
to implement:
a function of determining, in a case in which a plurality of the output values from the analog stick are values within a range in which the analog stick is assumed to be at the center point, an output value having a highest frequency among the plurality of output values; and
a function of updating, on a basis of the output value determined by the function of determining, the output value stored in the storage unit.
